# DEMANDE DE BREVET EUROPEEN

(11) **EP 0 627 591 A1**
(43) Date de publication de la demande: **07.12.1994**
(21) Numéro de dépôt: 94401104.8
(22) Date de dépôt: 18.05.1994
(51) Int. Cl.: F16L 33/02, F16B 2/08

(54) **Structure de collier de serrage**

(30) Priorité: 19.05.1993 FR 9306046
(71) Demandeur: Etablissements CAILLAU, F-92130 Issy-les-Moulineaux (FR)
(72) Inventeur: Calmettes, Lionel, F-23220 Bonnat (FR); André, Michel, F-41200 Romorantin Lanthenay (FR); Detable, Pascal, F-41130 Villedieu (FR)
(74) Mandataire: Descourtieux, Philippe

(57) **Abrégé**

Collier de serrage constitué par une bande de métal enroulée sur elle-même comportant au voisinage de ses extrémités, d'une part, une oreille formée par deux plis de bande accolés dos à dos et faisant radialement saillie par rapport à la périphérie extérieure du collier, d'autre part, un crochet susceptible d'être agrafé derrière l'oreille au cours du serrage du collier. La bande comporte deux portions (***1***,***2***) dont l'une, dite intérieure, s'étend au moins sur une circonférence complète, avec chevauchement partiel de son brin intérieur ***1******a*** et de son brin extérieur (***1******b***), cependant que l'autre portion, dite extérieure, s'étend seulement sur une partie de circonférence, la portion extérieure (***2***) étant fixée, à l'un de ses extrémités, par tout moyen approprié, sur la face extérieure de la portion intérieure (***1***) et étant convenablement formée à son autre extrémité pour constituer le crochet (***2******a***), l'oreille (***1******c***) étant elle-même disposée à l'extrémité du brin extérieur (***1******b***) de la portion intérieure (***1***).

## Description

Le brevet EP-A-3192 a décrit un collier constitué par une bande métallique, enroulée sur elle-même, dont l'une des extrémités présente une oreille faisant radialement saillie sur la périphérie extérieure du collier et dont l'autre extrémité est conformée en un crochet susceptible d'être agrafé derrière l'oreille pour maintenir le serrage du collier.

On sait que l'un des principaux avantages de ce collier antérieur est d'éviter en principe toute déformation permanente des diverses zones de la bande qui le constitue, au moment de sa mise en place et de son serrage.

Ce type de collier a déjà reçu divers perfectionnements, notamment pour lui conférer une réserve d'élasticité permettant de maintenir un serrage suffisant en cas de modification des dimensions de l'objet à serrer, en particulier sous l'effet des variations de température. A cet égard on peut se référer aux brevets EP-A-469 989, 491 609 ou 491 610. D'autres perfectionnements ont visé à améliorer l'appui du collier sur l'objet à serrer, notamment un tuyau souple emmanché sur un embout rigide; A cet effet on peut se référer au brevet EP-A-243 224.

Toutefois on s'est rendu compte, dans certains cas difficiles, que les qualités des colliers décrits par les brevets précités n'apparaissent pas encore suffisantes. Plus précisément, on exige quelquefois que l'appui du collier sur l'objet à serrer ne présente aucune discontinuité, et notamment que celle qui existe en regard de l'oreille soit complètement supprimée. Cette dernière est en effet constituée par deux plis de la bande accolés dos à dos et le raccordement arrondi des plis à la bande elle-même fait apparaître une petite discontinuité de la périphérie intérieure du collier, notamment si les faces en regard des plis ne sont pas rigoureusement au contact l'une de l'autre. Bien évidemment, il convient de conserver la continuité de l'appui, qui était déjà obtenue sous le crochet par la présence du prolongement de la bande ("*bavette*") au-delà de l'oreille, décrit notamment par le brevet EP-A-3192.

L'invention a donc pour objet d'apporter une solution au problème qui vient d'être mis en évidence et propose à cet effet une nouvelle structure de collier du genre évoquée plus haut.

Selon l'invention, la bande métallique constituant le collier comporte deux portions dont l'une, dite intérieure, s'étend sur plus d'une circonférence complète, avec chevauchement partiel de son brin extérieur et de son brin intérieur, et dont l'autre portion, dite extérieure, s'étend seulement sur une partie de circonférence. La portion extérieure est fixée, à l'une de ses extrémités, par tout moyen approprié, par exemple par rivetage ou par soudage, sur la face extérieure de la portion intérieure et est convenablement formée à son autre extrémité pour constituer le crochet, l'oreille étant elle-même disposée à l'extrémité du brin extérieur de la portion intérieure.

Grâce à ces dispositions, non seulement la discontinuité d'appui qui existait sous l'oreille peut être éliminée, mais également on peut s'affranchir facilement des discontinuités de la périphérie intérieure du collier, pouvant résulter de certains éléments accessoires, tels que les réserves d'élasticité.

L'invention sera mieux comprise et ses avantages apparaîtront au cours de la description qui va suivre d'un mode de réalisation en référence au dessin annexé dans lequel:

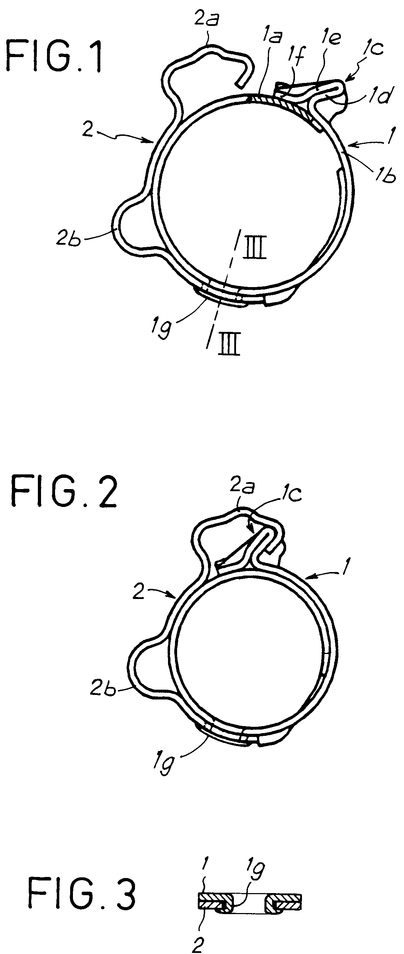

· La figure 1 est une vue en élévation, avec coupe partielle, d'un collier conforme à l'invention, avant serrage,
· La figure 2 est une vue analogue à la figure 1, après serrage,
· La figure 3 est une section suivant **III**-**III** de la figure 1.

Si l'on se reporte au dessin,on voit un collier constitué par deux portions ***1*** et ***2*** de bande métallique, réalisées de préférence, mais non nécessairement, dans la même bande. Ainsi les deux portions présenteront la même largeur et les matériaux qui les constituent auront les même propriétés physiques, notamment la même élasticité mais l'une et/ou l'autre de ces caractéristiques peuvent ne pas être utilisées.

La portion de bande ***1*** est dite intérieure et s'étend sur plus d'une circonférence complète, les extrémités de ses deux brins intérieur ***1******a*** et extérieur ***1******b*** se chevauchant partiellement. Des moyens appropriés, tels que ceux décrits par le brevet EP-A-243 224, permettent d'assurer une continuité parfaite de la périphérie intérieure de la portion de bande ***1*** dans la zone du chevauchement de ses deux brins.

A l'extrémité de son brin extérieur ***1******b*** la portion de bande ***1*** porte une oreille ***1******c*** constituée par deux plis ***1******d*** et ***1******e*** accolés dos à dos. De préférence, le pli extrême ***1******e*** est muni d'un petit prolongement ***1******f***, dont la longueur peut être déterminée conformément aux dispositions prévues par la demande de brevet déposée ce jour par la demanderesse et ayant pour titre : "*Collier de serrage*".

En outre, des dispositions connues peuvent être prévues, tant pour la rigification de l'oreille ***1******c***, que pour faciliter la prise d'appui de l'outil de serrage du côté de l'oreille ; bien que réprésentées sur le dessin, ces dispositions ne sont pas nécessaires dans le cadre de l'invention et ne seront donc pas décrites.

La portion de bande ***2*** est judicieusement conformée à l'une de ses extrémités pour constituer un crochet ***2******a***. A son autre extrémité la portion ***2*** est fixée sur la face extérieure de la portion ***1*** par tout moyen approprié.

Dans l'exemple représenté, on a réalisé une fixation par rivetage, c'est-à-dire par matage, sur la portion ***2***, des bords d'un embouti cylindrique ***1******g*** pratiqué dans la portion ***1***. Des dispositons complémentaires, visibles sur le dessin, peuvent être prévues pour éliminer toute agressivité de l'extrémité de la portion de bande ***2***, au-delà de sa fixation sur la portion ***1***.

La portion de bande ***2*** comporte, d'autre part, au moins une ondulation ***2******b***, constituant une réserve d'élasticité permettant, ainsi qu'on le sait, de maintenir un effort suffisant de serrage en cas de variation du diamètre de l'objet à serrer.

La structure du collier ayant été décrite il faut encore souligner que les portions de bande ***1*** et ***2*** sont formées de façon à présenter des courbures voisines permettant le serrage du collier dans les conditions décrites par les brevets précités, notamment par le brevet EP-A-3192.

On voit cependant que, même avant serrage, mais surtout après serrage du collier, l'espace situé sous le crochet ***2******a*** ainsi que la zone de raccordement des plis ***1******d*** et ***1******e*** au brin extérieur ***1******b*** sont situés en regard du brin intérieur ***1******a*** de la première portion de bande ***1***. Il en est de même de l'espace situé sous l'ondulation ***2******b***. Après le serrage la parfaite continuité de la périphérie interne du collier et, par conséquent, de l'appui sur l'objet à serrer est établie par la coopération des moyens prévus à cet effet, sur le brin extérieur ***1******b*** et à l'extrémité du brin intérieur ***1******a***.

## Revendications

1. Collier de serrage constitué par une bande de métal enroulée sur elle-même comportant au voisinage de ses extrémités, d'une part, une oreille formée par deux plis de bande accolés dos à dos et faisant radialement saillie par rapport à la périphérie extérieure du collier, d'autre part, un crochet susceptible d'être agrafé derrière l'oreille au cours du serrage du collier, caractérisé en ce que la bande comporte deux portions (***1*,*2***) dont l'une, dite intérieure, s'étend au moins sur une circonférence complète, avec chevauchement partiel de son brin intérieur ***1******a*** et de son brin extérieur (***1******b***), cependant que l'autre portion, dite extérieure, s'étend seulement sur une partie de circonférence, la portion extérieure (***2***) étant fixée, à l'un de ses extrémités, par tout moyen approprié, sur la face extérieure de la portion intérieure (***1***) et étant convenablement formée à son autre extrémité pour constituer le crochet (***2******a***), l'oreille (***1******c***) étant elle-même disposée à l'extrémité du brin extérieur (***1******b***) de la portion intérieure (***1***).
